Europäisches Patentamt

European Patent Office

Office européen des brevets

(19)

(11) **EP 1 609 513 A1**

(12) **EUROPEAN PATENT APPLICATION**
published in accordance with Art. 158(3) EPC

(43) Date of publication:
**28.12.2005 Bulletin 2005/52**

(51) Int Cl.[7]: **A63F 13/00**, A63F 13/12,
G06F 17/60, G09F 19/00

(21) Application number: **03816549.4**

(22) Date of filing: **29.08.2003**

(86) International application number:
**PCT/JP2003/011070**

(87) International publication number:
**WO 2004/087272 (14.10.2004 Gazette 2004/42)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **31.03.2003 JP 2003096500**

(71) Applicant: **Konami Corporation
Chiyoda-ku, Tokyo 100-6330 (JP)**

(72) Inventor: **AOKI, Jun, Konami Corporation
Tokyo 100-6330 (JP)**

(74) Representative: **Röss, Walter Josef Alfred
Winter, Brandl, Fürniss, Hübner,
Röss, Kaiser, Polte
Partnerschaft
Patent- und Rechtsanwaltskanzlei
Alois-Steinecker-Strasse 22
85354 Freising (DE)**

(54) **HOME GAME MACHINE, HOME GAME MACHINE CONTROL METHOD AND PROGRAM**

(57) A game device capable of offering sufficient advertisement opportunities to advertisers is provided. The game machine includes advertisement displaying means for displaying an advertisement on a game screen; advertisement point calculating means for calculating an advertisement point of the advertisement displayed on the game screen; point comparing means for comparing an accumulated value of the advertisement point, which is calculated by the advertisement displaying means, with a predetermined guaranteed point; and related advertisement output means for outputting a related advertisement which relates to the advertisement in response to a comparison result by the point comparing means.

FIG. 2

EP 1 609 513 A1

**Description**

TECHNICAL FIELD

The present invention relates to a game device, a control method for a game machine and a program, more specifically to a game device, a control method for a game machine and a program capable of offering advertisement opportunities to advertisers preferably when an advertisement image is displayed on a game screen.

BACKGROUND ART

Various systems for displaying advertisements on game screens have been proposed. For example, Japanese Patent No. 3236603 invented by the inventors of the present application, discloses a system in which a reasonable charge is made for displaying an advertisement distributed from an advertisement management server on a game screen. According to this system, advertisement charges are collected for displaying a game advertisement so that the price of the game software can be accordingly reduced or made free.

Advertisements are sometimes not displayed sufficiently when the game scene displaying the advertisements is fixed. For example, in the case where various objects including advertisement objects are disposed in a three dimensional game space and a view of the three dimensional game space, which is seen from a viewpoint which is moved with a character operated by a player, is displayed on a monitor such as a TV receiver, the advertisement objects are not displayed on the monitor unless the player moves the game character ahead of the advertisement object so as to face the object. Further, when a program is made to display the advertisement in a certain game advancement level, the advertisements are not displayed if the player is not reached to the game advancement level. That is, advertisements are sometimes not displayed depending on the content of the operation of the player if the game scene displaying the advertisement is fixed. However, it is desirable that the advertisement opportunity should be offered sufficiently once the advertisement is to be displayed on the game image.

The present invention has been conceived in order to solve the above problems, and an object of the present invention is to provide a game device, a control method for a game machine and a program capable of preferably offering advertisement opportunities to advertisers.

DISCLOSURE OF THE INVENTION

In order to achieve the above objects, according to the present invention, there is provided a game device, comprising: advertisement displaying means for displaying an advertisement on a game screen; advertisement point calculating means for calculating an advertisement point of the advertisement displayed on the game screen; point comparing means for comparing an accumulated value of the advertisement point, which is calculated by the advertisement point calculating means, with a predetermined guaranteed point; and related advertisement output means for outputting a related advertisement which relates to the advertisement in response to a comparison result obtained by the point comparing means.

According to the present invention, there is provided a game machine control method, comprising: an advertisement displaying step of displaying an advertisement on a game screen; an advertisement point calculating step of calculating an advertisement point of the advertisement displayed on the game screen; a point comparing step of comparing an accumulated value of the advertisement point, which is calculated by the advertisement point calculating step with a predetermined guaranteed point; and a related advertisement output step of outputting a related advertisement which relates to the advertisement in response to a comparison result in the point comparing step.

According to the present invention, there is provided a program for causing computers such as a home-use game machine, a business-use game machine, a personal computer, a server computer, a cellular phone, and a personal digital assistant, to function as: advertisement displaying means for displaying an advertisement on a game screen; advertisement point calculating means for calculating an advertisement point of the advertisement displayed on the game screen; point comparing means for comparing an accumulated value of the advertisement point, which is calculated by the advertisement point calculating means with a predetermined guaranteed point; and related advertisement output means for outputting a related advertisement which relates to the advertisement in response to a comparison result obtained by the point comparing means.

According to the present invention, when the advertisement is displayed on the game screen, the advertisement point of the relevant advertisement is calculated. Then, the related advertisement which relates to the advertisement is output in response to the result obtained by comparing the accumulated value of the advertisement point with the predetermined guaranteed point. Therefore, for example, in the case where the accumulated value of the advertisement point for a predetermined period has not reached the predetermined guaranteed point, the related advertisement is output to offer advertisement opportunities to a particular advertiser.

In one embodiment of the present invention, the related advertisement output means outputs audio which relates to the advertisement as the related advertisement. Thus, an audio advertisement can be made as the related advertisement of the advertisement displayed on the game screen. Since the audio advertisement output has less influence on the game than that of image display, it is possible to make the related advertisement with ease while the game is being played.

In the embodiment of the present invention, the related advertisement output means displays an image, which relates to the advertisement as the related advertisement. The image related to the advertisement may be a still image or motion image. Thus, the advertisement image can be displayed as the related advertisement of the advertisement displayed on the game screen. Since advertisement image output has appealing to the player, high quality advertisement opportunities can be offered to the advertiser.

In the embodiment of the present invention, the related advertisement output means includes related advertisement data storing means. The related advertisement data storing means stores related advertisement data for representing the content of the related advertisement and output time identifying information indicating the output time for outputting the related advertisement, which are in relation to each other. The related advertisement output means monitors arrival of the output time in response to the comparison result by the point comparing means to output the related advertisement based on the related advertisement data when the output time has arrived. Thus, the related advertisement is output at an appropriate time set in advance.

In the embodiment of the present invention, the game device further comprises means for receiving data related to the advertisement or the related advertisement from another device. Thus, the advertisement or the related advertisement can be updated with ease.

In the embodiment of the present invention, the advertisement point calculating means includes means for obtaining displayed amount information of the advertisement on the game image, and calculates the advertisement point based on the displayed amount information of the advertisement. The displayed amount information may be information including quantity evaluation on an advertisement, such as a display frequency, a display time, and a displayed area. According to the embodiment, the related advertisement can be output in accordance with the quantity evaluation on the advertisement displayed on the game screen.

In the embodiment of the present invention, the advertisement point calculating means includes means for obtaining display quality information of the advertisement on the game screen, and calculates the advertisement point based on the display quality information of the advertisement. The display quality information may be information including quality evaluation on an advertisement, such as sharpness of the image displayed, the position on a game screen where the advertisement image is displayed, whether or not the entire advertisement image is displayed without any missing portions, a relationship between the direction in which an advertisement is displayed, or an advertisement placement direction, and the viewing direction. According to the embodiment, the related advertisement can be output in response to the quality evaluation on the advertisement displayed on the game screen.

In the embodiment of the present invention, the point comparing means includes date and time information obtaining means for obtaining date and time information, and decides an accumulated period of the advertisement point based on the date and time information. The time information may be information indicating date or time, or may be information indicating both of the date and time. Thus, whether or not the related advertisement should be output can be judged every predetermined date or time.

In the embodiment of the present invention, the point comparing means includes game advancement level obtaining means for obtaining advancement level of the game provided on the game screen and decides an accumulated period of the advertisement point based on the game advancement level. The game advancement level is information specifying a stage, level of a player, game screen, or number of laps in a race game and the like. According to the embodiment, whether or not the related advertisement should be output can be judged every game advancement level.

BRIEF DESCRIPTION OF THE DRAWINGS

Fig. 1 is a diagram showing a hardware structure of a game device.
Fig. 2 is a diagram illustrating a game image containing an advertisement object image having an advertisement image attached thereto.
Fig. 3 is a diagram showing an advertisement database in the game device.
Fig. 4 is a flowchart showing a game routine in the game device.
Fig. 5 is a flowchart showing the advertisement guarantee routine in the game device.
Fig. 6 is a flowchart showing a forced advertisement routine in the game device.

BEST MODE FOR CARRYING OUT THE INVENTION

In the following, an embodiment of the present invention will be described in detail with reference to the accompanying drawings.

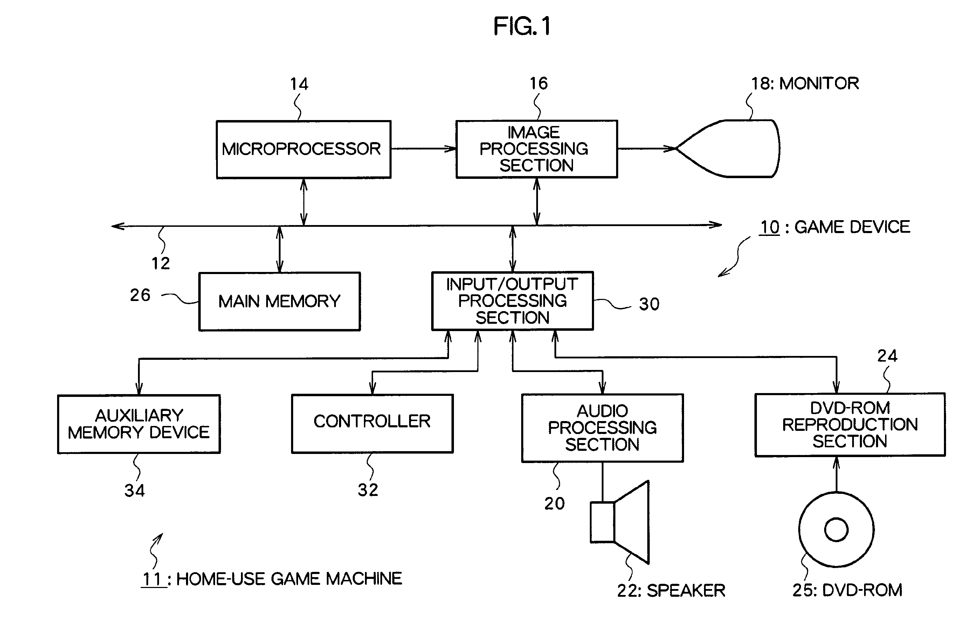

Fig. 1 is a diagram showing a hardware structure of a game device according to an embodiment of the present invention. Fig. 1 shows the structure of a game device 10 composed mainly of a home-use game machine. Specifically, the shown game device 10 comprises a home-use game machine 11, connected to a monitor 18 and a speaker 22, and a DVD-ROM 25, serving as an information storage medium, attached to the home-use game machine 11. Whereas the DVD-ROM 25 is used here to supply game programs and game data to the home-use game machine 11, any other information storage media, such as a CD-ROM or a ROM card, may be used instead. Alternatively, various communication networks, such as the Internet, may also be utilized to remotely supply game programs and game data to the home-use game machine 11.

The home-use game machine 11 comprises a microprocessor 14, an image processing section 16, a main memory 26, and an input/output processing section 30, all being mutually connected via a bus 12 for data communication. The input/output processing section 30, in particular, is also connected to a controller 32, an auxiliary memory device 34, an audio processing section 20, and a DVD-ROM reproduction section 24. Various components of the home-use game machine 11, other than the controller 32, are accommodated in an enclosure. The monitor 18 may be a home-use TV receiver, for example, and the speaker 22 may be a speaker incorporated into the home-use TV receiver.

The microprocessor 14 controls various sections of the home-use game machine 11 based on an operating system stored in the ROM, not shown, or a game program read from the DVD-ROM 25. The bus 12 is necessary for exchanging an address and data among various sections of the home-use game machine 11. The main memory 26, which is constructed including a storage means such as a RAM, is supplied with a game program and game data read from the DVD-ROM 25 as required, and is used with the microprocessor 14. The image processing section 16, which is constructed including a VRAM, receives image data from the microprocessor 14, and generates a game image in the VRAM based on the image data received from the microprocessor 14. The image processing section 16 also converts the game image into a video signal to output to the monitor 18 at predetermining timing.

The input/output processing section 30 serves as an interface for relaying data communication among the controller 32, the auxiliary memory device 34, the audio processing section 20, the DVD-ROM reproduction section 24, and the microprocessor 14. The controller 32 serves as input means via which the player can supply input for game operation. The input/output processing section 30 scans operating states of the various buttons of the controller 32 in a given cycle (for example, every one sixtieth of a second) , and supplies an operation signal indicative of the scanning result to the microprocessor 14 via the bus 12. Based on the operation signal, the microprocessor 14 judges the player's game operation. The audio processing section 20 is constructed including a sound buffer, and reproduces data of music, game sound effects, and so on, read from the DVD-ROM 25 and stored in the sound buffer, for output to the speaker 22. The DVD-ROM reproduction section 24, in response to an instruction from the microprocessor 14, reads a game program and game data from the DVD-ROM 25. The auxiliary memory device 34 may be a known memory device, such as a hard disk storage device, a memory card reader and a memory card, or a magneto-optical memory device.

In this embodiment, an advertisement (a game advertisement) is output while a game is being played on the game device 10. The game advertisement may be supplied from various advertisers in the form of a still picture, a motion picture, audio, character data (text data), and so forth. The game advertisement is pre-stored in the DVD-ROM 25, or stored in the auxiliary memory device 34 after the game advertisement is downloaded from the server, not shown, via a network. The game device 10 outputs relevant advertisement by means of displaying or audio outputting based on the data while the game is being executed. With the structure in which the data concerning the advertisement is distributed via the network, the latest game advertisement can be output in the game device 10, so that the effect of an advertisement can be enhanced.

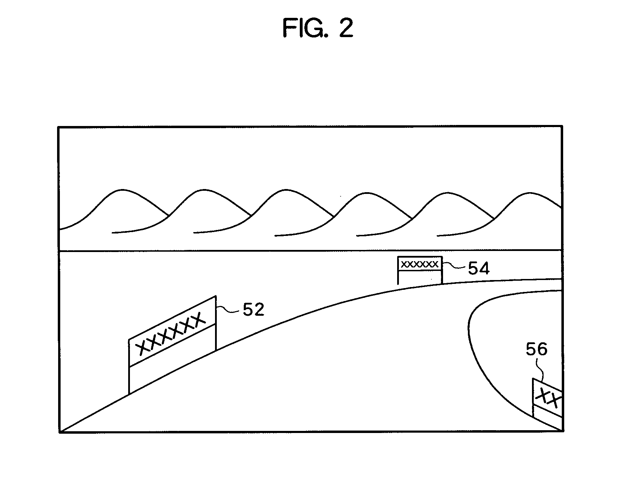

Fig. 2 is a diagram showing an example of a game image displayed on the monitor 18 of the game device 10. As shown, the advertisement image representing a commercial advertisement is embedded in the game image in the embodiment. The game device 10 is constructed so as to establish a virtual 3D space that serves as a game space within the main memory 26, and a view from a viewpoint set up in the space is displayed in the display device. That is, the game device 10 has game software and game data installed therein which are necessary to execute a 3D game. Fig. 2 shows an example of a game image of a 3D driving game. In this game, advertisement objects 52, 54, and 56 are installed along a road built in the game space (virtual 3D space), each having an advertisement image attached thereon (texture mapping). A view that would be seen from the viewpoint is displayed on the game screen. Here, the advertisement images attached to the advertisement objects 52, 54, and 56 are pre-stored in the DVD-ROM 25, or downloaded from an advertisement management server. Note that, the advertisement image does not need to be raster data, and text data describing a copy message for an advertisement may be used. In this case, the text data may be converted into an image using font data, pre-stored in the game device 10, so that the resultant image is used as an advertisement image. An object for attachment of an advertisement image is not limited to the advertisement objects 52, 54, and 56, and may be any kind of object, including a construction object, such as a building, a game character object, and a moving object, such as a vehicle. For a game character object, an advertisement may be shown as a part or the whole of a pattern of a dress. In the game device 10, the viewpoint and the viewing direction in the game space may vary according to the content of operation input via the controller 32, whereby the game image displayed on the monitor 18 is accordingly changed. Therefore, The advertisement objects 52, 54, and 56 are sometimes not displayed sufficiently on the monitor 18 depending on the content of the operation by the player.

In the game device 10 in this embodiment, display of an advertisement image is evaluated for its quality and quantity, and the advertisement point is calculated so as to reflect the evaluation result obtained. The advertisement point is accumulated for a predetermined period. A method of calculating the advertisement point is performed as follows. That is, an advertisement image displayed relatively large on the game screen will be calculated with a commensurately high advertisement point. On the other hand, an advertisement image displayed relatively small will be calculated with a commensurately low advertisement point. Further, when the direction in which an advertisement image is displayed, or a advertisement installation direction, differs significantly from the viewing direction and the advertisement image is resultantly displayed distorted on the game screen, a commensurately low advertisement point will be calculated. On the other hand, when the placard installed direction substantially matches with the viewing direction and the relevant advertisement image is resultantly displayed with less distortion on the game screen, a commensurately high advertisement point will be calculated. Still further, an advertisement image fully displayed on the game screen will be calculated for advertisement outputting as usual, while an advertisement image only partially displayed on the game screen due to clipping will not be calculated. Alternatively, a ratio in area between an actually displayed portion of an advertisement image and the whole advertisement image may be allowed for calculating the advertisement point. Still further, an advertisement image displayed closer to the center of the game screen may be calculated more.

When the advertisement point of an advertisement accumulated for a predetermined period has not reached the predetermined guaranteed point, a forced advertisement (related advertisement) corresponding to the advertisement is made. This forced advertisement may be an audio advertisement or an image advertisement. The forced advertisement may be made at the time of starting/ending the game, or while the game is being played. Preferably, the forced advertisement should be made so as to match the game content and game advancement level, so that it does not spoil the game's atmosphere.

In the following, an advertisement process in the game device 10 will be described in detail.

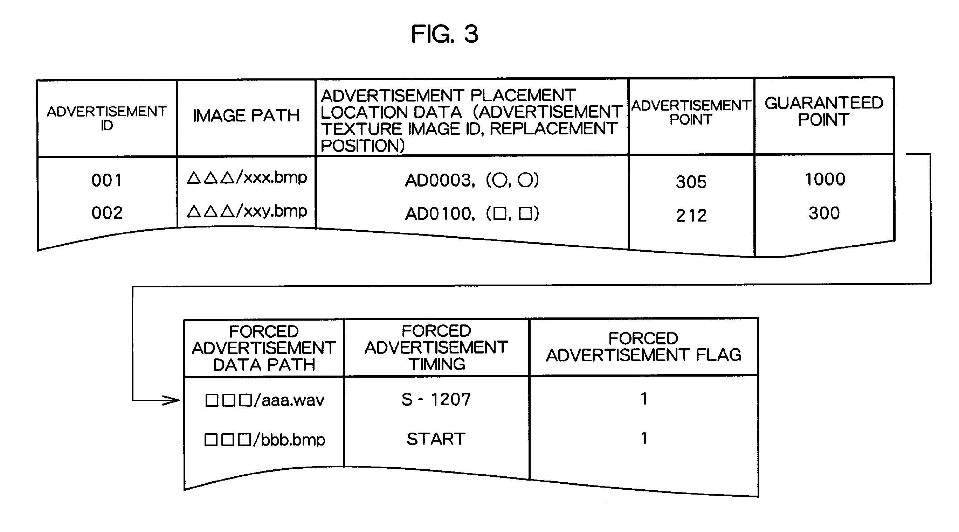

Fig. 3 is a diagram explaining the content of an advertisement database. The advertisement database may be stored in the game device 10. While the game is being played, the advertisement database is read from the DVD-ROM 25 or the auxiliary memory device 34 to be stored in the main memory 26, which is updated as required. The advertisement database is stored in the auxiliary memory device 34 again at the time of ending the game.

As shown, the advertisement database is configured to store "advertisement ID", "image path", "advertisement placement location data", "advertisement point", "guaranteed point", "forced advertisement data path""forced advertisement timing", and "forced advertisement flag", all being mutually associated. In the advertisement database, "advertisement ID" is information identifying an advertisement image. "Image path" indicates an image file name and a location where an advertisement image is stored. In the case where the advertisement image is downloaded from the advertisement management server, the downloaded advertisement image is stored in the auxiliary memory device 34, and information designating a path in the auxiliary memory device 34, where the image is stored, is stored in the column of this "image path". "Advertisement placement location data" indicates a specific texture image and a specific portion therein where an advertisement image is to be embedded. "Advertisement point" is numerical information to be incremented while an advertisement image is displayed on a game screen, and is reset to zero at the time of ending the stage or when a predetermined time has passed from the start timing of the increment. Alternatively, the total accumulated value of the advertisement point may be transferred to the advertisement management server for advertisement charge or the like. "Guaranteed point" is a standard value of the advertisement point which is accumulated for a predetermined time. When the accumulated value of the advertisement point of an advertisement has not reached this standard value, the forced advertisement corresponding to this advertisement is output. "Forced advertisement data path" indicates an image file name and a location where the data of the forced advertisement corresponding to the advertisement image identified by the advertisement ID is stored. The forced advertisement may be an audio advertisement and/or an image advertisement, while the image advertisement may be a motion image advertisement and/or a still image advertisement. These advertisements are identified by a file extension of the forced advertisement. "Forced advertisement time" indicates a time to output the forced advertisement. When the set time to output the forced advertisement is during the game being played, ID for identifying the game scene such as "S-1207" is stored in the output time column as shown in the drawing. When the set time to output the forced advertisement is the time of starting the game, a character string representing the time of starting the game is stored in the output time column as "START" in the drawing. When the set time to output the forced advertisement is the time of ending the game, a character string representing the time of ending the game such as "end" is stored in the output time column. "Forced advertisement flag" is a flag which identifies whether the forced advertisement, corresponding to the advertisement image identified by the advertisement ID, is in standby states to be output at the moment. When "1" is stored in this column, arrival of the time is monitored, which is stored in the column of corresponding forced advertisement time, so as to output the forced advertisement when the time arrives. On the other hand, when "0" is stored in the column, the above process is not performed.

In the following, a process of displaying an advertisement on a game screen using the above described advertisement database will be detailed with reference to a flowchart.

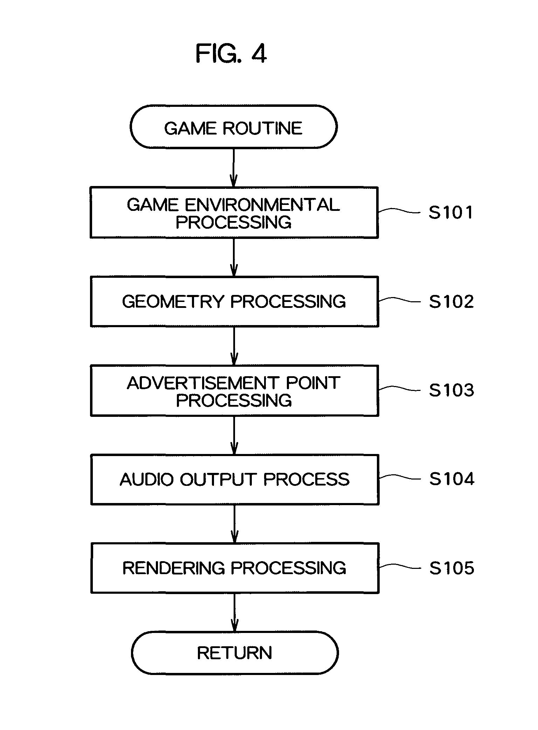

Fig. 4 is a flowchart showing a game routine executed in the game device 10. This process is performed every predetermined time, e.g. 1/60 second, in accordance with the game program stored in the DVD-ROM 25. As shown, the microprocessor 14 of the game device 10 initially executes a game environment process based on the game program and game data read from the DVD-ROM 25 (S101). In the game environment process, positions and orientations of all stationary and dynamic objects in the game space are calculated. A stationary object is an object that does not change its position as the game proceeds, and may include a road object, a mountain object, a grassland object, advertisement objects 52, 54, 56, and so on. A dynamic object, on the other hand, is an object that changes its position and/or orientation as the game proceeds, and may include a vehicle object, not shown. The position and orientation of the dynamic object may vary according to a game program or an operation signal input via the controller 32. In the game environment process, the viewpoint, the viewing direction, the position of the view range, and light source information are also calculated. Here, a viewpoint and a viewing direction move with the vehicle object, which changes its position and orientation according to the operation signal input via the controller 32.

The microprocessor 14 then performs a geometry process (S102). In the geometry process, coordinates in a world coordinate system are converted to those in a viewpoint coordinate system, in which, setting the viewpoint as an origin, the direction advancing from the viewpoint, or a viewing direction, is determined as a Z direction; a horizontal direction is determined as an X direction; and a vertical direction is determined as an Y direction. Further, color information concerning the vertex of each polygon that constitutes an object is modified based on light source information concerning the color and position of the light source. Clipping is also applied.

Subsequently, the game device 10 performs an advertisement point process (S103). In the advertisement charge process, whether or not an object to which an advertisement image is attached as a texture is present in the view range is determined. Further, an object constituted of a polygon or polygons including one to which an advertisement image is attached and that is not clipped is determined. Then, for each unclipped polygon for attachment of an advertisement image, an advertisement point P is calculated based on the following expression (1).

$$P = f(\theta) \times g(S) \times h(r) \qquad (1)$$

θ is a displaced angle between the viewing direction and the advertisement placement direction or a value corresponding to the displaced angle. The viewing direction is a direction from the viewpoint to the center of the view range. The advertisement placement direction is a direction from the rear side of a polygon on which the advertisement image is attached toward the front surface thereof. θ can be calculated from a scalar product between the normal vector of a polygon to which an advertisement image is attached as a texture, and the viewing direction vector. S represents a displayed area, or a value corresponding thereto, of a polygon to which an advertisement image is attached as a texture. For brevity of the data processing, assuming that the area of a polygon itself in the game space is set as σ, a value resulting from dividing σ by the distance from the viewpoint to the polygon, i.e. a Z value, can be used as a displayed area S. r is a distance between the display position of an advertisement image and the center of the game screen. For example, the distance between the straight line in the viewing direction, that penetrates the viewpoint and the polygon having an advertisement image attached thereon, may be used as a distance r. f is a function, specifically a decreasing function, of a displaced angle θ, becoming larger for a smaller displaced angle θ and smaller for a larger displaced angle θ. g is a function, specifically an increasing function, of a displayed area S, becoming larger for a larger displayed area S and smaller for a smaller displayed area S. h is a function, specifically a decreasing function, of the distance r, becoming smaller for a larger distance r and larger for a smaller distance r. The functions f, g, and h may be continuous or discontinuous functions.

As described above, among all polygons to which an advertisement is attached as a texture, for each polygon to which an advertisement image is attached and placed within a view field without clipping, an advertisement point P is calculated using the expression (1). Then, the resultant value of the calculated point P is added to the value in the "advertisement point" column in the advertisement database (Fig. 3). Specifically, "advertisement point" contained in a record for each advertisement image is read; the advertisement P calculated using the expression (1) is added to the point read from the "advertisement point"; and the resultant point is stored again in the "advertisement point" column of that record.

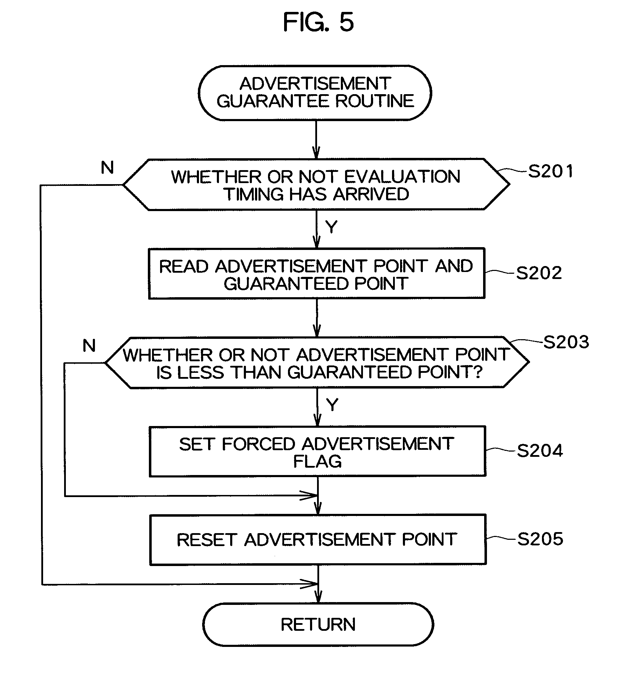

Thereafter, an advertisement guarantee routine shown in Fig. 5 is performed as a part of the advertisement point process. This process is performed on every advertisement image and in this process, whether the evaluation time of the advertisement point has arrived or not is initially judged (S201). The evaluation time of the advertisement point is a time for judging whether the accumulated value of the advertisement point has reached the guaranteed point or not. For example, the time at which the predetermined time has passed from the previous evaluation time is set as the evaluation time of the advertisement point. The predetermined time may be, for example, 5 minutes, 1 week, or 1 month, and may be set for every advertisement image or set common to all advertisement images. In this case, the date and time, at which comparison between the accumulated value of the advertisement point and the guaranteed point is made immediately before, is stored in the auxiliary memory device 34. Then, the date and time is read from the auxiliary memory device 34 and is compared with the date and time output from a clock means not shown, to judge whether the evaluation timing of the advertisement point has arrived or not.

Alternatively, whether or not the evaluation time of the advertisement point has arrived may be judged by the game advancement levels such as a stage, a level of a player, game scene, or the number of laps in a race game. In this case, the game advancement level, which is the evaluation time immediately before, is stored in the auxiliary memory device 34. When the game is comprised of a plurality of stages, whether or not the evaluation time has arrived may be determined by judging whether a predetermined number of stages have been played since the previous evaluation time. Further, in a race game or the like, in which a moving body such as a vehicle goes round a race course a plurality of times, whether or not the evaluation time has arrived may be determined by judging whether or not the moving body has completed the course a predetermined number of times from the previous evaluation time to the current evaluation time. Note that, the game advancement level may be set for every advertisement image or commonly set for all the advertisement images.

In S201, when it is judged that the evaluation time of the advertisement point has not arrived, the advertisement guarantee routine is finished. Then, if there is any advertisement image, which has not been processed, the advertisement guarantee routine is performed on the advertisement image. Further, when it is determined that the evaluation time has arrived, the advertisement point (accumulated value of the advertisement point) and guaranteed point, both relating to the advertisement image to be processed, are read from the advertisement database (S202). Then, comparison is made between the accumulated value of the advertisement point and the guaranteed point (S203). At this time, when the accumulated value of the advertisement point is equal to/more than the guaranteed point, zero is set in the advertisement point column of the advertisement database (S205), thus finishing the advertisement guarantee routine. Thereafter, if there is any advertisement image which has not been processed, the advertisement guarantee routine is performed on the advertisement image.

If the accumulated value of the advertisement point is less than the guaranteed point (S203), the forced advertisement flag which is stored in the advertisement database concerning the advertisement image to be processed at the moment, is set to 1 (S204). Further, for the advertisement image, zero is set in the advertisement point column of the advertisement database (S205), thus finishing the advertisement guarantee routine. Thereafter, if there is any advertisement image which has not been processed, the advertisement guarantee routine is performed on the advertisement image.

Returning to Fig. 4, the microprocessor 14 then performs audio outputting process (S104). In this process, when the audio which should be output is determined according to the game program, the audio data representing the audio is supplied to the audio processing section 20 to start the audio outputting. Further, if 1 is set in the forced advertisement flag regarding the forced advertisement for which audio data is stored in the forced advertisement data path by referring to the advertisement database, the audio data which is a record of the advertisement audio is supplied to the audio processing section 20 to start advertisement audio outputting.

Thereafter, the microprocessor 14 transfers a vertex coordinate, a vertex color information, a texture coordinate, and alpha value of each polygon to the image processing section 16, which is in a view range, and the image processing section 16 generates a display image in the buffer provided in the VRAM based on the transferred information (S105). The display image is generated by projecting the objects on the screen. Thus, the game image generated in the buffer is read at a predetermined timing to be displayed on the monitor 18.

In the advertisement guarantee routine described above, there are cases where the forced advertisement time and the forced advertisement flag of the advertisement database are set in order to output the audio advertisement and the image advertisement as the forced advertisement at the start/end of the game. In the game device 10 of the embodiment, whether or not the forced advertisement is found at the start/end of the game is determined by referring to the forced advertisement time or the forced advertisement flag of the advertisement database. When such a forced advertisement is found, it is output.

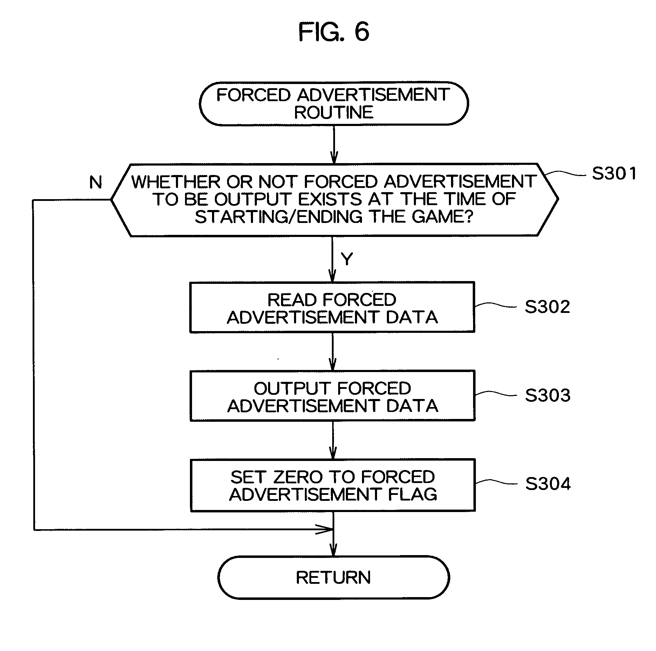

Fig. 6 is a diagram showing a forced advertisement routine executed by the game device 10 at the time of starting/ending the game. The forced advertisement routine initially reads the columns of the forced advertisement time and the forced advertisement flag to judge whether or not there is any forced advertisement to be output at the present time (at the time of the starting/ending the game) (S301). When no such forced advertisement is found, the process is finished. When any such forced advertisement is found, on the other hand, the path thereof is read from the column of the forced advertisement data path in the advertisement data path to read the forced advertisement data (S302). Then, the forced advertisement is output based on the data (S303). Thereafter, zero is set to the column of the forced advertisement flag of the advertisement database concerning the forced advertisement thus output (S304), and the forced advertisement routine is finished.

In the game device 10 described above, the advertisement point is calculated if the game image contains the advertisement image, and is added to the "advertisement point" in the advertisement database. Then, if the advertisement point accumulated for the predetermined period has not reached the guaranteed point, the forced advertisement data specified by the forced advertisement data path is reproduced at the time stored in the column of the forced advertisement timing, thus offering sufficient advertisement opportunities to the advertisers .

It should be noted that the present invention is not limited to the above described embodiment.

For example, whereas a commercial advertisement is displayed during performance of a 3D game in the above, the present invention can be similarly applied to displaying of a commercial advertisement during performance of a 2D game.

INDUSTRIAL APPLICABILITY

As described above, according to the present invention, an advertisement point of an advertisement displayed on a game screen is calculated. Then, a related advertisement which relates to the advertisement is output in response to the result obtained by comparing an accumulated value of the advertisement point with a predetermined guaranteed point, thus preferably offering advertisement opportunities to advertisers.

**Claims**

1. A game device, comprising:

   advertisement displaying means for displaying an advertisement on a game screen;
   advertisement point calculating means for calculating an advertisement point of the advertisement displayed on the game screen;
   point comparing means for comparing an accumulated value of the advertisement point, which is calculated by the advertisement point calculating means with a predetermined guaranteed point; and
   related advertisement output means for outputting a related advertisement which relates to the advertisement in response to a comparison result by the point comparing means.

2. A game device according to claim 1, wherein the related advertisement output means outputs audio which relates to the advertisement as the related advertisement.

3. A game device according to any one of claims 1 and 2, wherein the related advertisement output means displays an image which relates to the advertisement as the related advertisement.

4. A game device according to claim 3, wherein the image related to the advertisement is a still image.

5. A game device according to claim 3, wherein the image related to the advertisement is a motion image.

6. A game device according to any one of claims 1 to 5, wherein the related advertisement output means includes related advertisement data storing means which stores related advertisement data for representing a content of the related advertisement and output time identifying information for indicating output time for outputting the related advertisement, which are in relation to each other, and the related advertisement output means monitors arrival of the output time in response to the comparison result by the point comparing means and outputs the related advertisement based on the related advertisement data when the output time has arrived.

7. A game device according to any one of claims 1 to 6, further comprising:

   means for receiving data concerning any one of the advertisement and the related advertisement from another device.

8. A game device according to any one of claims 1 to 7, wherein the advertisement point calculating means includes means for obtaining displayed amount information of the advertisement on the game screen, and calculates the advertisement point based on the displayed amount information of the advertisement.

9. A game device according to any one of claims 1 to 8, wherein the advertisement point calculating means includes means for obtaining display quality information of the advertisement on the game screen, and calculates the advertisement point based on the display quality information of the advertisement.

10. A game device according to any one of claims 1 to 9, wherein the point comparing means includes time information obtaining means for obtaining time information and decides a period for accumulating the advertisement point based on the time information.

**11.** A game device according to any one of claims 1 to 9, wherein the point comparing means includes game advancement level obtaining means for obtaining an advancement level of a game provided on the game screen, and decides a period for accumulating the advertisement point based on the advancement level of the game.

**12.** A game machine control method, comprising:

an advertisement displaying step of displaying an advertisement on a game screen;
an advertisement point calculating step of calculating an advertisement point of the advertisement displayed on the game screen;
a point comparing step of comparing an accumulated value of the advertisement point, which is calculated by the advertisement point calculating step with a predetermined guaranteed point; and
a related advertisement output step of outputting a related advertisement which relates to the advertisement in response to a comparison result by the point comparing step.

**13.** A method according to claim 12, wherein audio which relates to the advertisement is output as the related advertisement in the related advertisement output step.

**14.** A method according to any one of claims 12 and 13, wherein an image which relates to the advertisement is displayed as the related advertisement in the related advertisement output step.

**15.** A method according to claim 14, wherein the image related to the advertisement is a still image.

**16.** A method according to claim 14, wherein the image related to the advertisement is a motion image.

**17.** A method according to any one of claims 12 to 16, wherein the related advertisement output step refers to related advertisement data storing means which stores related advertisement data for representing content of the related advertisement and output time identifying information for indicating output time for outputting the related advertisement, which are in relation to each other, and the related advertisement output means monitors arrival of the output time in response to the comparison result by the point comparing means, and outputs the related advertisement based on the related advertisement data when the output time has arrived.

**18.** A method according to any one of claims 12 to 17, further comprising:

a step of receiving data concerning any of the advertisement and the related advertisement from other device.

**19.** A method according to any one of claims 12 to 18, wherein the advertisement calculating step includes a step of obtaining the displayed amount information of the advertisement on the game screen, and calculates the advertisement point based on the displayed amount information of the advertisement.

**20.** A method according to any one of claims 12 to 19, wherein the advertisement point calculating step includes a step of obtaining display quality information of the advertisement on the game screen, and calculates the advertisement point based on the display quality information of the advertisement.

**21.** A method according to any one of claims 12 to 20, wherein the point comparing step includes a date and time information obtaining step of obtaining time information, and decides a period for accumulating the advertisement point based on the time information.

**22.** A method according to any one of claims 12 to 20, wherein the point comparing step includes a game advancement level obtaining step of obtaining an advancement level of a game provided on the game screen, and decides a period for accumulating the advertisement point based on the advancement level of the game.

**23.** A program for causing a computer to function as:

advertisement displaying means for displaying an advertisement on a game screen;
advertisement point calculating means for calculating an advertisement point of the advertisement displayed on the game screen;
point comparing means for comparing an accumulated value of the advertisement point which is calculated by the advertisement point calculating means with a predetermined guaranteed point; and
related advertisement output means for outputting a related advertisement which relates to the advertisement in response to a comparison result by the point comparing means.

**24.** A program according to claim 23, wherein the related advertisement output means outputs audio which relates to the advertisement as the related advertisement.

**25.** A program according to any one of claims 23 and 24, wherein the related advertisement output means displays an image which relates to the advertisement as the related advertisement.

26. A program according to claim 25, wherein the image which relates to the advertisement is a still image.

27. A program according to claim 25, wherein the image which relates to the advertisement is a motion image.

28. A program according to any one of claims 23 to 27, wherein the related advertisement output means includes related advertisement data storing means which stores related advertisement data for representing a content of the related advertisement and output time identifying information for indicating output time for outputting the related advertisement, which are in relation to each other, and the related advertisement output means monitors arrival of the output time in response to the comparison result by the point comparing means and outputs the related advertisement based on the related advertisement data when the output time has arrived.

29. A program according to any one of claims 23 to 28, wherein the program further causes the computer to function as means for receiving data concerning any of the advertisement and the related advertisement.

30. A program according to any one of claims 23 to 29, wherein the advertisement point calculating means includes means for obtaining displayed amount information of the advertisement on the game screen, and calculates the advertisement point based on the displayed amount information of the advertisement.

31. A program according to any one of claims 23 to 30, wherein the advertisement point calculating means includes means for obtaining display quality information of the advertisement on the game screen, and calculates the advertisement point based on the display quality information of the advertisement.

32. A program according to any one of claims 23 to 31, wherein the point comparing means includes time information obtaining means for obtaining time information and decides a period for accumulating the advertisement point based on the time information.

33. A program according to any one of claims 23 to 31, wherein the point comparing means includes game advancement level obtaining means for obtaining an advancement level of a game provided on the game screen, and decides a period for accumulating the advertisement point based on the advancement level of the game.

34. An information storage medium storing a program according to any one of claims 23 to 33.

# FIG.1

14 — MICROPROCESSOR

16 — IMAGE PROCESSING SECTION

18: MONITOR

10 : GAME DEVICE

12

26 — MAIN MEMORY

INPUT/OUTPUT PROCESSING SECTION — 30

34 — AUXILIARY MEMORY DEVICE

32 — CONTROLLER

20 — AUDIO PROCESSING SECTION

24 — DVD-ROM REPRODUCTION SECTION

22: SPEAKER

25: DVD-ROM

11 : HOME-USE GAME MACHINE

EP 1 609 513 A1

# FIG. 2

## FIG. 3

| ADVERTISEMENT ID | IMAGE PATH | ADVERTISEMENT PLACEMENT LOCATION DATA (ADVERTISEMENT TEXTURE IMAGE ID, REPLACEMENT POSITION) | ADVERTISEMENT POINT | GUARANTEED POINT |
|---|---|---|---|---|
| 001 | △△△/xxx.bmp | AD0003, (○, ○) | 305 | 1000 |
| 002 | △△△/xxy.bmp | AD0100, (□, □) | 212 | 300 |

| FORCED ADVERTISEMENT DATA PATH | FORCED ADVERTISEMENT TIMING | FORCED ADVERTISEMENT FLAG |
|---|---|---|
| □□□/aaa.wav | S - 1207 | 1 |
| □□□/bbb.bmp | START | 1 |

EP 1 609 513 A1

## FIG. 4

```
        ┌──────────────────────┐
        │     GAME ROUTINE     │
        └──────────────────────┘
                   │
                   ▼
     ┌───────────────────────────┐
     │   GAME ENVIRONMENTAL      │──── S101
     │        PROCESSING         │
     └───────────────────────────┘
                   │
                   ▼
     ┌───────────────────────────┐
     │    GEOMETRY PROCESSING    │──── S102
     └───────────────────────────┘
                   │
                   ▼
     ┌───────────────────────────┐
     │    ADVERTISEMENT POINT    │──── S103
     │        PROCESSING         │
     └───────────────────────────┘
                   │
                   ▼
     ┌───────────────────────────┐
     │   AUDIO OUTPUT PROCESS    │──── S104
     └───────────────────────────┘
                   │
                   ▼
     ┌───────────────────────────┐
     │   RENDERING PROCESSING    │──── S105
     └───────────────────────────┘
                   │
                   ▼
        ┌──────────────────────┐
        │        RETURN        │
        └──────────────────────┘
```

# FIG. 5

```
        ┌─────────────────────────┐
        │     ADVERTISEMENT       │
        │   GUARANTEE ROUTINE     │
        └────────────┬────────────┘
                     │
   N    ┌────────────┴────────────────┐
 ┌──────┤  WHETHER OR NOT EVALUATION  ├─── S201
 │      │      TIMING HAS ARRIVED     │
 │      └────────────┬────────────────┘
 │                   │ Y
 │      ┌────────────┴────────────────┐
 │      │ READ ADVERTISEMENT POINT AND├─── S202
 │      │      GUARANTEED POINT       │
 │      └────────────┬────────────────┘
 │                   │
 │  N   ┌────────────┴────────────────┐
 │ ┌────┤ WHETHER OR NOT ADVERTISEMENT├─── S203
 │ │    │ POINT IS LESS THAN          │
 │ │    │ GUARANTEED POINT?           │
 │ │    └────────────┬────────────────┘
 │ │                 │ Y
 │ │    ┌────────────┴────────────────┐
 │ │    │  SET FORCED ADVERTISEMENT   ├─── S204
 │ │    │          FLAG               │
 │ │    └────────────┬────────────────┘
 │ │                 │
 │ └─────────────────┤
 │      ┌────────────┴────────────────┐
 │      │   RESET ADVERTISEMENT POINT ├─── S205
 │      └────────────┬────────────────┘
 │                   │
 └───────────────────┤
        ┌────────────┴────────────┐
        │          RETURN         │
        └─────────────────────────┘
```

# FIG. 6

```
          ╭─────────────────────────╮
          │  FORCED ADVERTISEMENT   │
          │         ROUTINE         │
          ╰─────────────────────────╯
                       │
                       ▼
  N  ╱────────────────────────────────────────────╲    S301
 ◄───┤ WHETHER OR NOT FORCED ADVERTISEMENT          ├───
     ┤   TO BE OUTPUT EXISTS AT THE TIME OF         ├
      ╲     STARTING/ENDING THE GAME?              ╱
        ╲────────────────────────────────────────╱
                       │ Y
                       ▼
          ┌─────────────────────────┐
          │     READ FORCED         │    S302
          │  ADVERTISEMENT DATA     │
          └─────────────────────────┘
                       │
                       ▼
          ┌─────────────────────────┐
          │     OUTPUT FORCED       │    S303
          │  ADVERTISEMENT DATA     │
          └─────────────────────────┘
                       │
                       ▼
          ┌─────────────────────────┐
          │  SET ZERO TO FORCED     │    S304
          │  ADVERTISEMENT FLAG     │
          └─────────────────────────┘
                       │
                       ▼
          ╭─────────────────────────╮
          │        RETURN           │
          ╰─────────────────────────╯
```

16

| | | |
|---|---|---|
| **INTERNATIONAL SEARCH REPORT** | International application No. | PCT/JP03/11070 |

| A. CLASSIFICATION OF SUBJECT MATTER |
|---|
| Int.Cl⁷ A63F13/00, A63F13/12, G06F17/60, G09F19/00 |

According to International Patent Classification (IPC) or to both national classification and IPC

| B. FIELDS SEARCHED |
|---|
| Minimum documentation searched (classification system followed by classification symbols) |
| Int.Cl⁷ A63F13/00-13/12, G06F17/60, G09F19/00 |

Documentation searched other than minimum documentation to the extent that such documents are included in the fields searched
Jitsuyo Shinan Koho        1926–1996    Toroku Jitsuyo Shinan Koho    1994–2003
Kokai Jitsuyo Shinan Koho  1971–2003    Jitsuyo Shinan Toroku Koho    1996–2003

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | US 2002/0120589 A1 (Konami Co., Ltd.), 29 August, 2002 (29.08.02), Full text; all drawings & JP 2002-253847 A   & EP 1236487 A2 | 1-34 |
| Y | JP 2002-149687 A (Kabushiki Kaisha Neburu), 24 May, 2002 (24.05.02), Par. No. [0016] (Family: none) | 1-34 |

☐ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 October, 2003 (20.10.03) | 04 November, 2003 (04.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)